# EUROPEAN PATENT APPLICATION

(11) **EP 4 832 119 A1**
(43) Date of publication of application: **28.10.2026**
(21) Application number: 26171839.9
(22) Date of filing: 13.04.2026
(51) Int. Cl.: H01M 4/74, H01M 4/75, H01M 10/052

(54) **FLEXIBLE CURRENT COLLECTOR FOR BATTERIES AND METHODS FOR MAKING SAME**

(30) Priority: 23.04.2025 US 202563793216 P; 09.04.2026 US 202619643431
(71) Applicant: Pacesetter, Inc., Sylmar, CA 91342 (US)
(72) Inventor: JIANG, Xiaofei, Sylmar, CA 91342 (US); DUGGAN, John Charles, Sylmar, CA 91342 (US)
(74) Representative: Barker Brettell Sweden AB

(57) **Abstract**

A current collector (100) for a battery (10) includes a flexible current collector portion (102) including a lattice (!08) defined by a plurality of interconnected unit cells (110), each unit cell (110) of the plurality of interconnected unit cells (110) including curvilinear segments (112) bounding a through-hole (114), wherein an intersection of each curvilinear segment (112) of the plurality of interconnected unit cells (110) defines a node (116). One or more curvilinear segments (112) of the plurality of interconnected unit cells (110) define an outer border (106) extending about an outer perimeter of the lattice (108) and one or more control features (122) extend radially outward from the outer border (106). A lead portion (104) extends radially outward from the outer border (106) of the lattice (108).

## Description

### FIELD OF THE TECHNOLOGY

The present disclosure relates generally to energy storage devices and methods for manufacturing energy storage devices, and in particular, flexible current collector designs and batteries incorporating same.

### BACKGROUND

Batteries used in critical medical device applications, such as implantable medical devices (IMDs), such as implantable cardiac pacemakers, insertable cardiac monitors, and implantable cardioverter defibrillators, have strict quality and performance requirements. Since the replacement of the battery in an IMD requires a patient to undergo surgery, batteries for IMDs must have a long service life where they meet precise therapeutic output requirements based on dynamic patient therapy needs.

One important component of a battery for an IMD is the cathode assembly. IMD batteries may contain one or multiple flat plate-type cathode assemblies, which for lithium-ion batteries to take one example, are commonly made by uniaxial compaction of cathodic material onto, through, and around a porous metal lattice (*e.g.,* a grid, a mesh, a screen, etc.) current collector. The bulk of the metal current collector is substantially encapsulated within the composite cathode structure. The current collector provides mechanical support to the electrode materials and enables electrons to flow to the cathodic material from a connected external circuit. The cathodic material can be formed from a reactive material, such as an electrically active or electrochemically active material, along with polymer binders, carbon, graphite, or other additives. This composition causes such cathodes to contract and expand to varying degrees, changing in density both during manufacture and afterward during use. The density of the metal current collector, however, does not change during manufacture or use.

Primary cathodic materials change density by compaction and swelling and/or relaxation during manufacturing and use of cathode assemblies during the compaction pressing process, causing simultaneous outward expansion to a perimeter of the tool cavity, immediately after pressing during the dry relaxation and/or swelling stage, immediately after electrolyte filling during the wet relaxation and/or swelling stage, and with use during the discharge relaxation and/or swelling stage. These movements within the aggregate cathodic material are significantly constrained by typical primary current collector structural designs. A typical primary-type cathode collector is constructed of a thin metal sheet including porous openings of simple, closed geometric shapes that establish a lattice in the remaining, adjacent metal material. These openings are typically an evenly spaced pattern of round, square, diamond, hexagonal, or rectangular closed shapes. The metals used to manufacture cathode collectors, such as aluminum, stainless-steel, or titanium, do not plastically deform along with, or to the same degree or with the same malleability as, the cathode materials that encapsulate them. This disparity in material properties, in combination with the structural shape of the current collector openings that define the associated solid, interconnected metal lattice, result in a structural conflict within the cathode assembly as cathodic materials move. This structural conflict may produce defects in cathode assemblies, such as warping, cracking, delamination (including separation from the cathode collector), and edge defects.

Accordingly, there is a need for cathode assemblies without defects resulting from such structural conflicts.

### SUMMARY

One aspect of the present disclosure relates to a current collector for a battery. The current collector includes a flexible current collector portion having a lattice defined by a plurality of interconnected unit cells, each unit cell of the plurality of interconnected unit cells including curvilinear segments bounding a through-hole. An intersection of each curvilinear segment of the plurality of interconnected unit cells defines a node. One or more curvilinear segments of the plurality of interconnected unit cells define an outer border extending about an outer perimeter of the lattice and one or more control features extend radially outward from the outer border of the lattice. A lead portion extends radially outward from the outer border of the lattice.

Another aspect of the present disclosure relates to a battery. The battery includes a pair of conductive anodes and a conductive cathode interposed between the pair of conductive anodes. The conductive cathode comprises a current collector according to the description above.

A further aspect of the present disclosure relates to a battery. The battery includes a pair of conductive anodes and a conductive cathode interposed between the pair of conductive anodes. The conductive cathode includes a cathode current collector formed from a resilient material. The cathode current collector includes a lattice defined by a plurality of interconnected unit cells, each unit cell of the plurality of interconnected unit cells including curvilinear segments bounding a through-hole, a frameless, undulating outer border encompassing the lattice, and one or more control features extending radially outward from the frameless, undulating border.

Another aspect of the present disclosure relates to a further current collector for a battery. The current collector includes a flexible lattice defined by a plurality of interconnected unit cells, each unit cell of the plurality of interconnected unit cells including arcuate segments bounding a through-hole, wherein the arcuate segments define a tri-lobe profile. A frameless outer border extends about a perimeter of the flexible lattice. The frameless outer border is defined by radial outermost unit cells of the plurality of interconnected unit cells. A protuberance extends radially outward from the frameless outer border and a lead portion extends radially outward from the frameless outer border.

Yet another aspect of the present disclosure relates to a battery. The battery includes a pair of conductive anodes and a conductive cathode interposed between the pair of conductive anodes. The conductive cathode comprises a current collector according to the description above.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

Various embodiments of the present batteries, current collectors for batteries, and methods for manufacturing batteries and current collectors for batteries are disclosed herein with reference to the drawings, wherein:
FIG. 1 is a cross-sectional view of an electrolytic capacitor or battery in accordance with the disclosure;
FIG. 2 is an exploded, perspective view of a cathodic assembly in accordance with the disclosure;
FIG. 3 is a plan view of an embodiment of a cathode collector of the cathodic assembly of FIG. 2;
FIG. 4 is a plan view of another embodiment of a cathode collector of the cathodic assembly of FIG. 2;
FIG. 5 is an enlarged view of the area of detail indicated in FIG. 4;
FIG. 6 is a plan view of yet another embodiment of a cathode collector of the cathodic assembly of FIG. 2;
FIG. 7 is a schematic diagram of a geometric shape of a pattern of the cathode collector of FIG. 6;
FIG. 8 is a plan view of another embodiment of a cathode collector of the cathodic assembly of FIG. 2 that incorporates the geometric shaped pattern shown in FIG. 7;
FIG. 9 is a plan view of another embodiment of a cathode collector of the cathodic assembly of FIG. 2;
FIG. 10 is a schematic diagram of a geometric shape of a pattern of the cathode collector of FIG. 9;
FIG. 11 is a plan view of another embodiment of a cathode collector of the cathodic assembly of FIG. 2;
FIG. 12 is an enlarged view of the area of detail indicated in FIG. 11;
FIG. 13 is a cross-sectional view of another electrolytic capacitor or battery in accordance with the disclosure;
FIG. 14 is an exploded, perspective view of a cathodic assembly of the electrolytic capacitor or battery of FIG. 13; and
FIG. 15 is a graphical representation of a battery discharge curve of the cathode collector of FIG. 2.

### DETAILED DESCRIPTION

The present application describes current collectors for batteries and batteries using current collectors as described herein. Although generally described as being used for lithium-metal or lithium-ion batteries, it is envisioned that the current collectors described herein may be used with any suitable electrochemical cell or battery technology without departing from the scope of the disclosure. Illustrative, but non-limiting, examples of such other electrochemical cell or battery technology, in which the current collectors can be used, include lithium-iodide or lithium carbon monofluoride batteries. The battery embodiments described herein may be particularly useful to the operation of IMDs, such as, without limitation, implantable cardiac pacemakers, insertable cardiac monitors, and implantable cardioverter defibrillators.

As used herein, the terms "substantially," "generally," "about," "approximately," and "essentially," in conjunction with ranges of dimensions, concentrations, temperatures or other physical or chemical properties or characteristics is meant to cover variations that may exist in the upper and/or lower limits of the ranges of the properties or characteristics, including, for example, variations resulting from rounding, measurement methodology or other statistical variation.

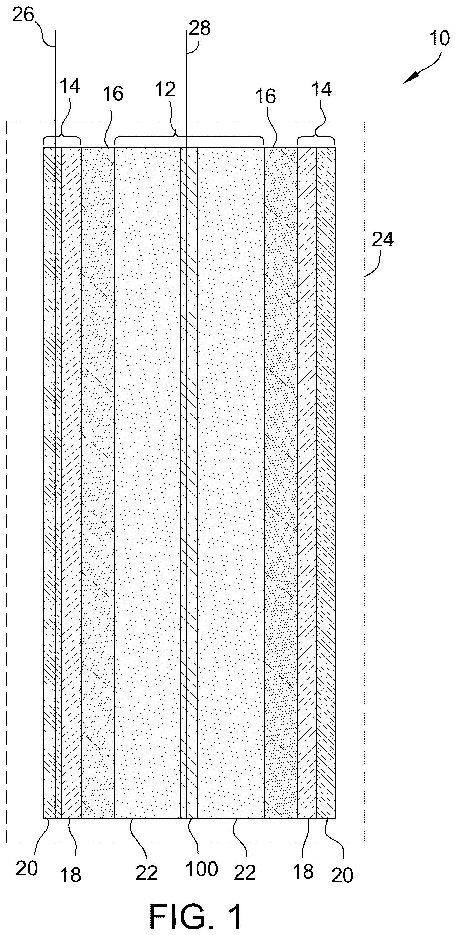

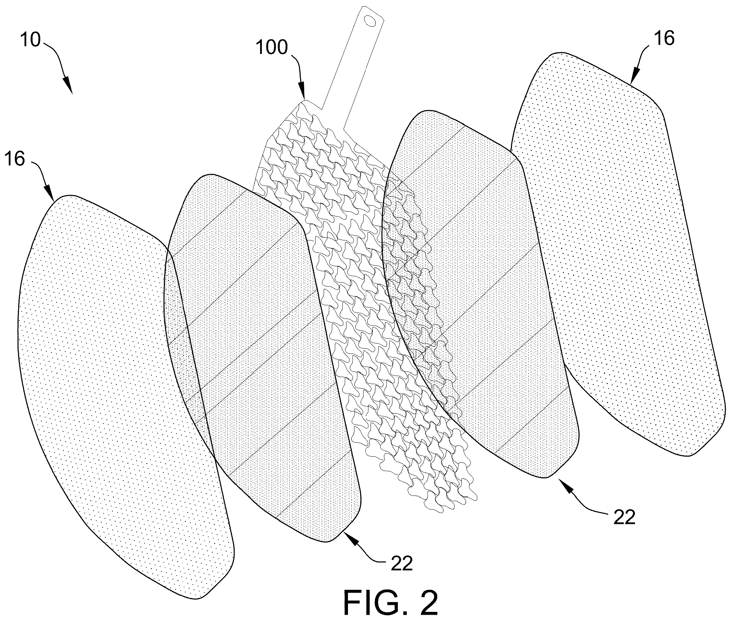

The drawings, FIGS. 1 and 2 illustrate an embodiment of a battery 10 in accordance with the disclosure. The battery 10 includes a cathode 12, also referred to herein as a cathode assembly 12, and a pair of anodes 14, also referred to herein as anode assemblies 14, sandwiching the cathode 12. Although generally described as having a pair of anodes 14, it is contemplated that the battery 10 may include any number of anodes 14, such as three, four, etc., without departing from the scope of the disclosure. Each anode 14 is separated from the cathode 12 by a separator 16. In an illustrative, but non-limiting, example the separator 16 may be in the form of a microporous polypropylene, microporous polyethylene, combinations of polyethylene and polypropylene, a microporous polyethylene and/or polyethylene reinforced with alumina, a microporous polyethylene and/or polypropylene reinforced with aramid, and/or combinations thereof.

Each of the cathode 12 and the anodes 14 may include active material 18, 22 bonded to one or more current collectors 20, 100. Anode active material may be lithium metal. Suitable materials for the cathode active material include, for example, manganese dioxide (MnO₂), fluorinated carbon (CFx), and silver vanadium oxide (SVO), or other materials by itself or including combined mixtures thereof. The active materials 18, 22 take part in the electrochemical reaction to produce an electrical current, while the current collectors 20, 100 are formed from a conductive material that provides a low-resistance flow path for the electrical current. For example, each anode 14 may include an anode active material 18 bonded to an anode current collector 20 and the cathode 12 may include a cathode active material 22 mixed with other additives and bonded to opposing sides of a cathode current collector 100. The assembly of the cathode 12, the anodes 14, and the separators 16 may be arranged in an insulating housing 24. Each anode current collector 20 may be electrically connected together and joined to a negative terminal 26 of the battery 10 and the cathode current collector 100 may be joined to a positive terminal 28 of the battery 10.

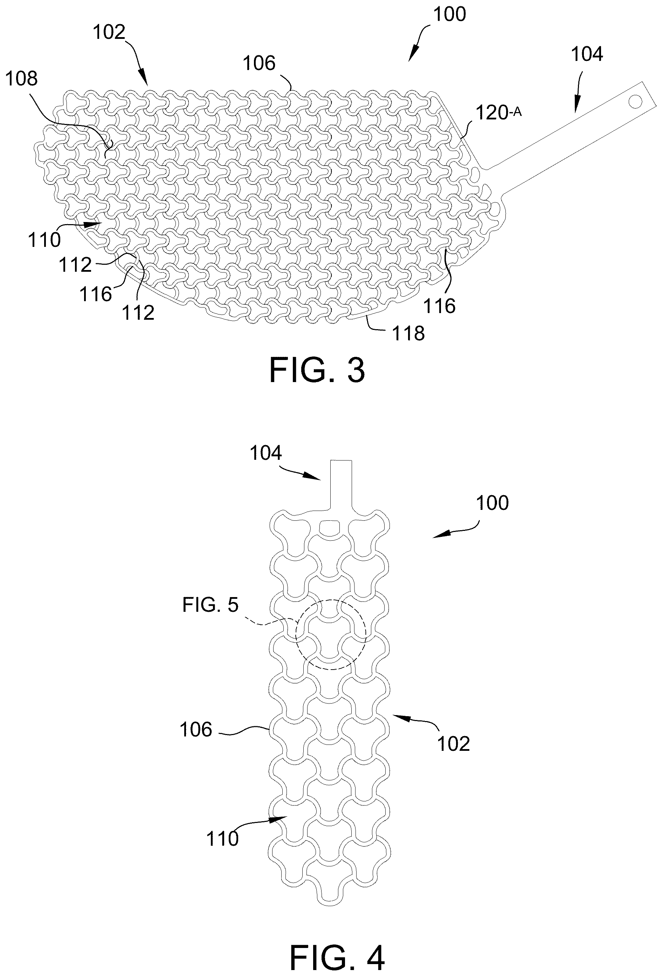

With additional reference to FIG. 3, the cathode current collector 100 defines a current collector portion 102 and a lead portion 104 operatively connected (e.g. forming mechanical and electrical connection) to the current collector portion 102. The current collector portion 102 and the lead portion 104 may be formed as a unitary component or may be formed as two or more separate components joined using any suitable method, including but not limited to, welding, adhesives, fasteners, mechanical couplings, or combinations thereof. In one non-limiting embodiment, the current collector 100 is formed from a single piece of material including both the current collector portion 102 and the lead portion 104. In such an embodiment, the cathode current collector 100 may be monolithic. The cathode current collector 100 defines a generally planar configuration, although the cathode current collector 100 may define any suitable configuration without departing from the scope of the disclosure, such as a rolled, regular or irregular sinusoidal, folded, sawtooth, arcuate, circular, oval, or other configuration by itself or combined with planar or one or more other configurations. For example, the current collector portion 102 may define a planar configuration and at least a portion of the lead portion 104 may define an arcuate and/or circular configuration. The cathode current collector 100 may be formed or fabricated using any suitable methods, including but not limited to, additive manufacturing, compacting and sintering a granular metal precursor, electrodeposition, processing solid sheets or foils of conductive precursor by stamping, laser cutting, water jet cutting, electrical discharge machining, hydroforming, punching, etching, blanking, or combinations thereof. Suitable materials for the cathode current collector 100 include, for example, titanium, carbon coated titanium, platinum and/or iridium coated titanium, aluminum, stainless steel, nickel-based alloys, ferritic steel, highly alloyed nickel-containing ferritic stainless steel, cobalt based alloys, alloys such as Superferrit^{®} or Elgiloy^{®}, or combinations thereof. In the example embodiment, the cathode current collector 100 is a flexible cathode current collector 100 formed from a compliant or otherwise flexible material and/or includes geometry that permits at least a portion of the flexible cathode current collector 100 to flex, bend, and/or change shape. In this manner, the flexible cathode current collector 100 may include portions that are flexible and other portions that may be rigid depending upon the design needs of the battery 10.

The current collector portion 102 defines a frameless or otherwise undulating outer perimeter and/or border 106 encompassing an interior lattice 108 including a plurality of unit cells 110. In embodiments that the interior lattice 108 is flexible, the interior lattice 108 may also be referred to herein as a flexible lattice 108. In the example embodiment, radial outermost unit cells of the plurality of unit cells 110 define the undulating outer border 106. The undulating outer border 106 and the interior lattice 108 cooperate to enable mechanical compliance of the cathode current collector 100 within the cathode 12. Cathode current collectors having a rigid and/or uniform outer perimeter may develop significant hoop stresses resisting the generally outward or radial cathodic expansion during fabrication or battery discharge. In contrast, the mechanical compliance or flexibility of the cathode current collector 100 of the embodiments permits the cathode current collector 100 to physically distort or stretch in accordance with the encapsulating, outer cathodic materials during fabrication (e.g., during pressing, etc.) and during battery discharge. As a result, a cathode 12 that is manufactured with the compliant or flexible cathode current collector 100 has fewer defects and is flatter (a desirable feature for flat type cathode assemblies) as compared to rigid cathode current collectors or flexible cathode current collectors having a contiguous or rigid outer perimeter or frame.

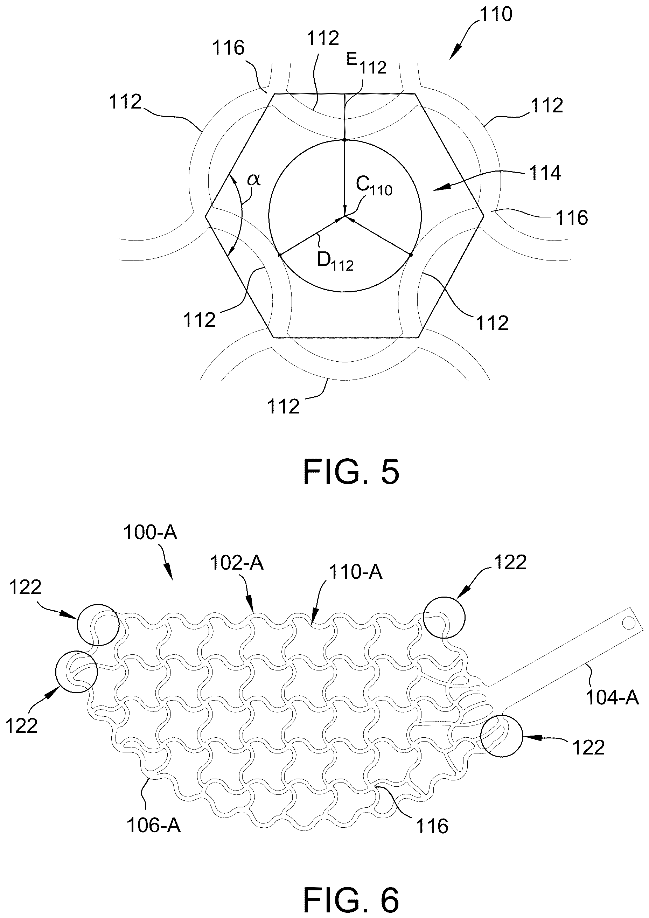

With continued reference to FIG. 3, and with additional reference to FIGS. 4 and 5, the plurality of unit cells 110 of the interior lattice 108 include curvilinear and/or arcuate segments or strands 112 defining, and surrounding, an interior through-hole 114 (FIG. 5), although any portion of any of the segments 112 may be linear without departing from the scope of the disclosure. The segments 112 connect to one another at nodes or intersections 116. The curvilinear configuration of the segments 112 enables the ends of the segments 112 connected at the nodes 116 to displace or otherwise deform along with the cathodic active material 22 during swelling.

In one non-limiting embodiment, the plurality of unit cells 110 connect or otherwise are interconnected at respective nodes 116. In the example embodiments of FIGS. 3-5, the angle defined by each segment 112 intersecting one another at a corresponding node 116 is greater than or equal to 90 degrees, although the angle defined by any one or portion of the segments 112 intersecting with another segment 112 at a corresponding node 116 may be less than 90 degrees without departing from the scope of the disclosure. In the example embodiment of FIGS. 3-5, the segments 112 of the unit cell 110 define a tri-lobe or clover shaped profile. An angle of intersection α at each node 116 between adjacent segments 112, represented, for purposes of example, by linear segments intersecting at each respective node 116, greater than or equal to 90 degrees allows for better contact between the cathode active material 22 and the current collector portion 102 at the node 116 as compared to an intersection angle α that is less than 90 degrees at every node 116. Further and as shown in FIG. 5, the curvilinear profile of the segments 112 defines a radial distance D₁₁₂ between a center point C₁₁₀ of the unit cell 110 and an inner-most portion of the segments 112, which provides a shorter, or the shortest, electrical path from the cathode active material 22 to the current collector portion 102 as compared to segments 112 forming a linear profile. The curvilinear shape of the unit cell 110 mechanically supports the cathode 12 by minimizing the size of gaps between each segment 112 and reducing the potential for delamination of the cathode current collector 100 from the active cathode material 22 and improves conductivity of the battery 10 as compared to unit cells 110 having linear shaped segments 112.

Battery performance may be impacted by a volume of cathode current collector 100 material within the cathode 12, which allows for more active material 18, 22 to be contained within the battery 10 compared to inactive cathode current collector 100 material. In this manner, mechanical strength of the battery 10 is balanced with the performance of the battery 10. The dimensions of one or more of the unit cells 110 of the cathode current collector 100 can vary based upon a desired battery discharge rate (C) of the battery 10. In this manner, batteries 10 having a high discharge rate may use a cathode current collector 100 where the unit cells 110 are densely populated (e.g., a large number of small unit cells 110). Batteries 10 having a low discharge rate may use a cathode current collector 100 where the unit cells 110 are larger and less densely populated (e.g., small number of large unit cells 110) as compared to the high discharge rate battery 10.

The unit cell 110 geometry, density, thickness, etc. is based upon at least a structural performance of the cathode current collector 100, the electrochemical performance of the cathode current collector 100, and minimizing a volume of the cathode current collector 100 material within the battery 10. For example, the cathode collector unit cell 110 geometry may be selected to displace and flow with expanding cathodic material 22 to maintain electrical contact with the cathodic material 22 and prevent structural defects such as fractures, delamination, and warpage. However, in contrast to following the cathodic material 22, the cathode current collector 100 resists cathodic forces to provide structural support to the battery 10. Electrically, the unit cell 110 geometry may be selected to provide electrical conductivity for all regions of the active cathodic material 22. For example, the unit cell 110 geometry may be selected based on a chemistry of the active cathodic material 22 along with electrically conductive additives and electrically non-conductive binders, a thickness of the cathode 12, an area of principal planar faces, a shape of the principal planar faces, and a location of the lead portion 104 on the cathode 12.

In some embodiments, the current collector 100 may include an open area percentage defined by an area of the open space defined within the unit cells 110 of the current collector 100. For example, the current collector 100 may include an open area percentage of between about 50% and 85%, preferably selected within an interval of about 65% and 85%, and more preferably selected within an interval of about 70% and 80%. In one non-limiting embodiment, the current collector 100 includes an open area percentage of about 75%. In addition, the width and/or thickness of each segment 112 of the cathode current collector 100 are as small as possible while maintaining mechanical strength of the cathode current collector 100 to reduce the volume of current collector 100 material within the battery 10 compared to a battery 10 with segments 112 having a larger width and/or thickness. As described hereinabove, reducing the volume of current collector 100 material within the battery 10 enables the battery 10 to include more active material 18, 22 compared to inactive cathode current collector 100 material. The width of each segment 112 may be between about 0.009 in. (229 µm) and 0.020 in. (508 µm), and in some embodiments, about 0.0010 in. (25.4 µm). The thickness of the current collector portion 102 may be between about 0.0005 in. (12.7 µm) and 0.020 in. (508 µm), and in some embodiments, between about 0.003 in. (76.2 µm) and 0.010 in. (254 µm), depending upon the material from which the cathode current collector 100 is formed. For example, the thickness of the current collector portion 102 of a cathode current collector 100 formed from aluminum may have a thickness of between about 0.005 in. (127 µm) and 0.007 in. (178 µm) and a current collector portion 102 of a cathode current collector 100 formed from titanium may have a thickness of about 0.003 in. (76.2 µm). Although generally described as being formed from aluminum or titanium, a portion or all of the current collector portion 102 may be formed from any suitable material, such as those described hereinabove, without departing from the scope of the disclosure.

With continued reference to FIGS. 3-5, the undulating outer border 106 of the current collector portion 102 provides space for cathode active material 22 to bind together at the periphery of the cathode 12, which may result in better cathode integrity as compared to a current collector portion 102 having a rigid, uniform, outer border. Although generally described as having an undulating outer border 106, portions of the undulating outer border 106 may include geometries differing from the segments 112 of the remaining unit cells 110. For example, unit cells 110 disposed adjacent to the outer border 106 may be truncated or otherwise include a linear portion 118 (FIG. 3) to conform to a desired overall shape of the cathode current collector 100 and ensure that each unit cell 110 is fully enclosed by segments 112. Unit cells 110 disposed adjacent to the lead portion 104 may be reinforced or otherwise strengthened by one or more bridges 120 (FIG. 3) connecting the lead portion 104 to the current collector portion 102. The one or more bridges 120 may define any suitable profile and thickness, which may be the same or different than the profile of the unit cells 110 of the current collector portion 102 without departing from the scope of the disclosure.

The current collector 100 may be coated with a conductive coating, which in some embodiments, may be a material that is non-reactive with the electrolyte contained within the battery 10. For example, the conductive coating may be aluminum, tantalum, silver, platinum, etc. or combinations thereof. The conductive coating may be applied to the current collector 100 using any suitable method or process, such as, for example, thermal evaporation, sputtering, electroplating, dip coating, or combinations thereof. The conductive coating isolates and protects the underlying material forming the cathode current collector 100 from corrosion and other reactions caused by interaction between the underlying material of the cathode current collector 100 and the cathode active material 22. In an embodiment where the cathode active material 22 is CFx, the cathode current collector 100 may be coated with a carbon coating before the battery 10 is laminated. The carbon coating may be formed from a combination of one or more of graphite, carbon black as a filler, and a binder that can hold the graphite and/or carbon black powder together. As can be appreciated, the binder needs to be compatible with the electrolyte of the battery 10. The binder material may comprise a polyvinylidene fluoride (PVDF), a carboxymethyl cellulose (CMC), a styrene-butadiene rubber (SBR), or combinations thereof. The carbon coating may be formed from between about 20-30 wt% graphite, 0-70 wt% carbon black, and 0-30 wt% binder with a thickness of between about 0.001 in. - 0.010 in. (25.4 - 254 µm), although other suitable carbon coating formulations and thicknesses may be used without departing from the scope of the disclosure. In one non-limiting embodiment, the carbon coating may be formed from approximately 60 wt% graphite, 20 wt% carbon black, and 20 wt% CMC.

Turning to FIGS. 6-8, another embodiment of a cathode current collector is illustrated and generally identified by reference numeral 100-A. The cathode current collector 100-A is similar to cathode current collector 100, except for the shape and profile of the unit cells 110-A. The unit cell 110-A includes repeatable curvilinear segments 112-A interconnected at respective nodes 116-A. In the example embodiment, the curvilinear segments 112-A are similar to one another and oriented at a generally 90-degree angle to each other at the node 116-A, defining a generally square shaped configuration on average between nodes 116-A, although the curvilinear segments 112-A may be different from one another and/or may be oriented at an acute angle, an obtuse angle, or combinations thereof without departing from the scope of the disclosure. Although generally illustrated as having a sinusoidal or another similar periodic curvate form, the curvilinear segments 112-A may include any suitable repeatable form or set of forms without departing from the scope of the disclosure, such as a symmetrical, an asymmetrical, regular, irregular, periodic, or a non-periodic form.

As can be appreciated, cathode current collectors may use control features that are integral with the thin, flexible lead portion of the cathode current collector, such as holes, notches, or positive projections such as tabs. Although located on the lead, these types of control features are used to locate the current collector body within the pressing fixture cavity. However, since the control features are located on the lead portion of the cathode current collector, the thin flexible lead portion may deflect or otherwise deform, enabling the remaining portions of the cathode current collector to move relative to the control features. As a result, the position of the current collector within the pressing fixture cavity may not be accurate. The cathode current collector 100-A includes one or more control features or protuberances 122 disposed and/or otherwise formed at the periphery or outer border 106-A of the current collector portion 102-A. At least one of the control features 122 extends or otherwise projects radially outward from the outer border 106-A or radially beyond a nominal, average profile of the current collector portion 102-A. The nominal, average profile of the current collector portion 102-A may be found by connecting linear elements (e.g., straight and arcuate) to the outermost tangency points of the non-projecting (e.g., non-control feature portions) curvilinear segments 112-A located between each control feature 122. The control features 122 are sized and shaped to fit closely to walls of a cathode assembly pressing fixture die cavity (not shown), assisting with centering the cathode collector 100-A within the cathode assembly pressing fixture die cavity.

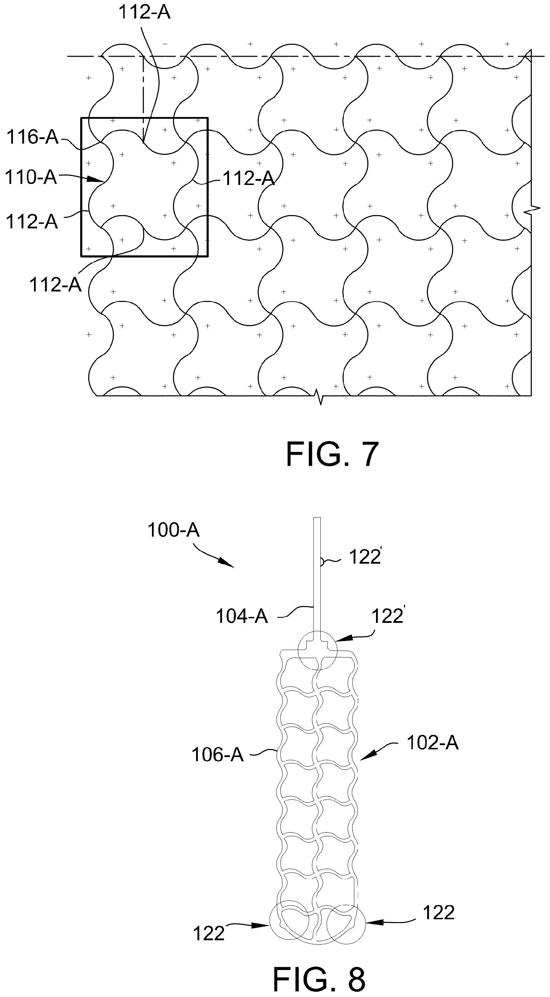

The control features 122 of the cathode current collector 100-A also serve as an ergonomic aid, providing quicker and easier insertion of the cathode current collector 100-A into the cathode assembly pressing fixture die cavity. Further, by centering the cathode current collector 100-A directly within the cathode assembly pressing fixture die cavity, the positional accuracy of the cathode current collector 100-A to the cathode assembly pressing fixture die cavity profile is improved compared to cathode current collectors having control features located on the lead portion. The control features 122 may be used independently of, or in combination with, a control feature 122' located on the lead portion 104-A (which may also be referred to as a positional control feature 122'). For example, a cathode current collector 100-A including control features 122, 122' on both the outer border 106-A and the lead portion 104-A (FIG. 8) may facilitate centering the current collector portion 102-A within the cathode assembly pressing fixture die cavity using the control features 122 on the current collector portion 102-A and control a position of the cathode current collector 100-A within a cathode assembly head-sealing fixture (not shown). Utilizing control features 122, 122' on both the current collector portion 102-A and the lead potion 104-A with a heat-sealed envelope (not shown) around the cathode 12 designed to be loose around the (expanding) cathode 12 can be useful because it requires less positional accuracy than embodiments lacking such control features 122. Further, the control features 122' on the lead portion 104-A used in the heat-sealing fixture are exposed outside of the heat-sealed envelope, reducing or otherwise inhibiting interference between the heat seal fixture and the control features 122', and therefore, reducing an effect the control features 122' may have on the integrity of the heat seal. Although generally described as defining a protuberance, any of the control features 122, 122' of the cathode current collector 100-A may define any suitable configuration without departing from the scope of the disclosure, such as a recess, a hole, a detent, a boss, etc. or combinations thereof. As shown in FIG. 8, a control feature 122' may be located on the lead portion 104-A, in addition to a control feature 122, extending radially outward from the border of the lattice and configured to fit a wall of a cathode assembly pressing fixture die cavity.

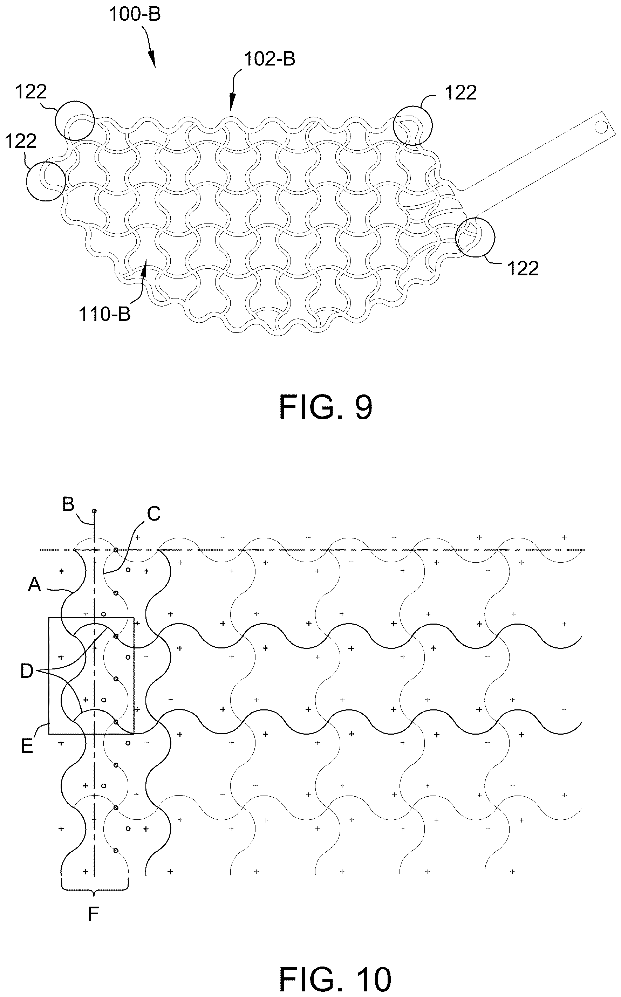

With reference to FIGS. 9 and 10, another embodiment of a cathode current collector is illustrated and generally identified by reference numeral 100-B. The cathode current collector 100-B is substantially similar to cathode current collector 100, except the shape and profile of the unit cells 110-B defines a generally hourglass profile. Each unit cell 110-B is disposed in a row and column arrangement, with a first curvilinear string A (e.g., connected arcs) extending along a first column F. A plurality of rows of arcs D extend normal to, or generally perpendicular to, the first curvilinear string A. An axis B is defined through a center of each respective arc of the plurality of rows of arcs D. The first curvilinear string A is copied or otherwise mirrored about the axis B to form a second curvilinear string C (which in some embodiments, is disposed at a half-period distance from the first curvilinear string A). A unit cell 110-B of the cathode current collector portion 102-B is defined by a portion of the first curvilinear string A and a pair of arcs of the plurality of rows of arcs D extending between the first curvilinear string A and the second curvilinear string C, illustrated as being contained within the area of detail indicated by E. The pair of arcs of the plurality of rows of arcs D may be elongated (e.g., increased radius and/or arc length) to create further separation between the first curvilinear string A and the second curvilinear string C, thereby increasing an area enclosed by the unit cell 110-B. This pattern may be repeated many times to define the current collector portion 102-B of the cathode current collector 100-B.

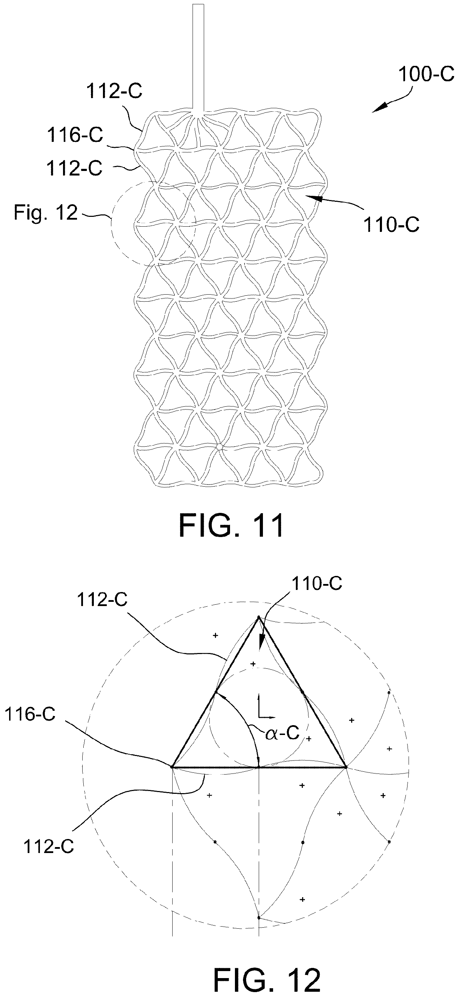

FIGS. 11 and 12 illustrate another embodiment of a cathode current collector, generally identified by reference numeral 100-C. The cathode current collector 100-C is substantially similar to cathode current collector 100, except the shape and profile of the unit cells 110-C defines a generally triangular profile. Each unit cell 110-C is disposed in a row and column arrangement, with nodes 116-C defined by intersecting vertices of adjacent unit cells 110-C. The segments 112-C defining each unit cell 110-C include a curvilinear profile and define a generally three-sided convex polygon. Although generally illustrated as having an equilateral profile, the disclosure is not so limited. For example, the curvilinear segments 112-C may be the same or different lengths to define any suitable three-sided polygon. In some embodiments, an angle of intersection α-C at each node 116-C between corresponding segments 112-C may be approximately 60 degrees.

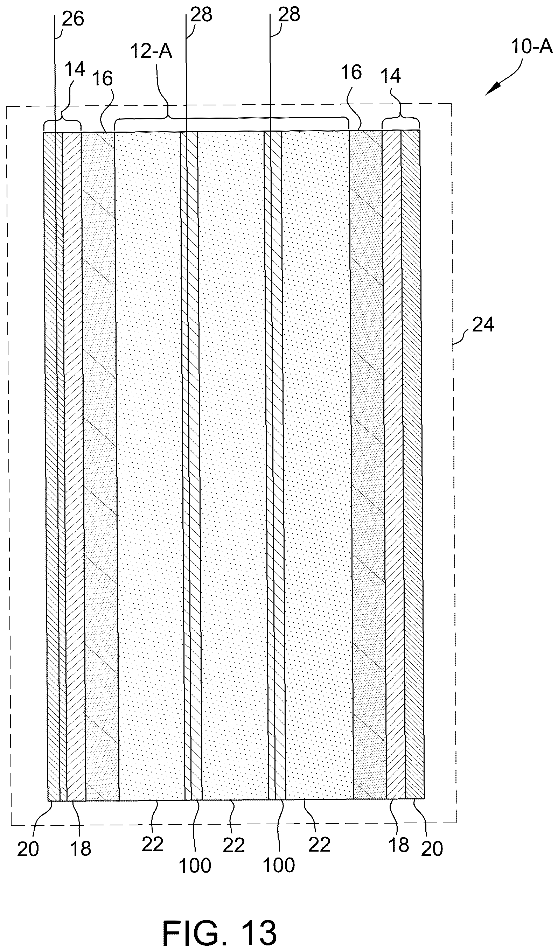

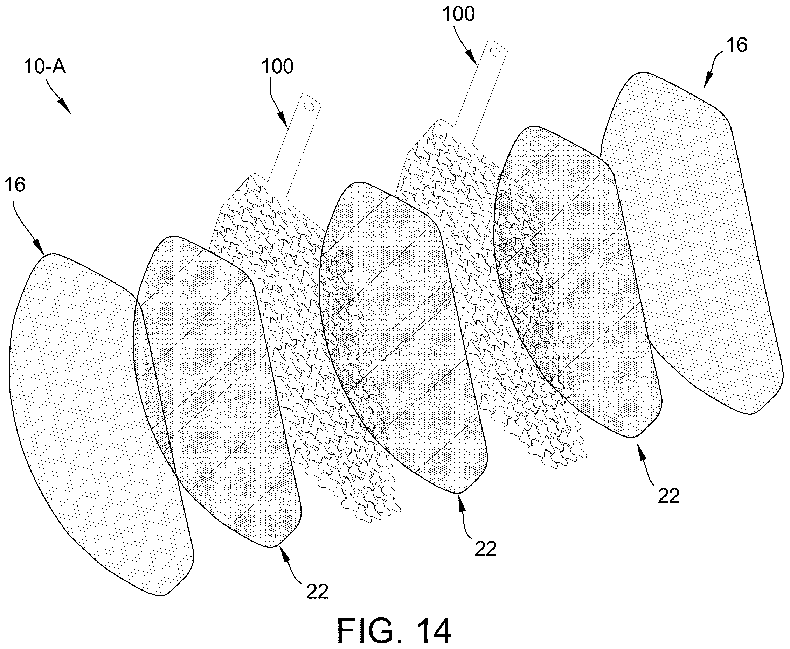

With reference to FIGS. 13 and 14, another embodiment of a battery is illustrated and generally identified by reference numeral 10-A. The battery 10-A is substantially similar to battery 10, except that cathode 12-A is formed from a two-current collector, tri-layer active cathodic material 22 structure. For example, the cathode 12-A may be formed from two cathode current collectors 100 and third layer of active cathodic material 22 bonded to the second cathode current collector 100. The cathode 12-A may include similar chemical properties as the cathode 12, although the disclosure is not so limiting. In some embodiments, the cathode 12-A is formed from a tri-layer structure including alternating active cathodic material 22 chemistries. In one non-limiting embodiment, a first layer of active cathodic material 22 may be formed from SVO, a second layer of active cathodic material 22 may be formed from CFx, and a third layer of active cathodic material 22 may be formed from SVO.

In some embodiments, the cathode 12-A may be formed from discrete components, such as individual layers of active cathodic material 22 and cathode current collectors 100, that are laminated together using a uniaxial pressing processes. In another non-limiting embodiment, the cathode 12-A may be formed by a web-based slurry coating process, where coated cathode current collector 100 foils are cut into rectangular sheets and compacted and laminated. Individual cathodes 12-A are subsequently cut to shape from the laminated cathode current collector 100 foil assemblies using a laser. The cathode current collector 100 of batteries 10 and 10-A can be in accordance with any of the embodiments disclosed herein, for instance, as shown in FIGS. 3 to 12. For example, the battery 10-A illustrated in FIG. 13 and 14 may include two of the same embodiment of the current collector 100 or two different embodiments of the current collector 100 without departing from the scope of the disclosure.

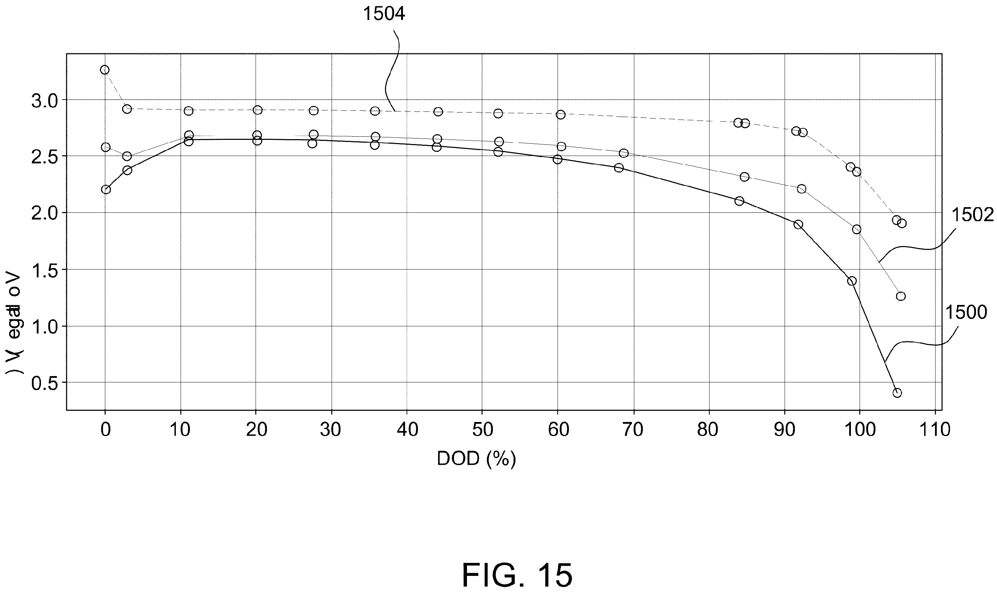

FIG. 15 illustrates a battery discharge curve for the battery 10 utilizing the cathode current collectors 100 described herein. The plot illustrated in FIG. 15 depicts a battery discharge curve 1500 (depth of discharge (DoD)) for a battery utilizing a cathode current collector having a rigid outer border and a battery discharge curve 1502 for the battery 10 utilizing the cathode current collector 100 with an undulating outer border 106 described herein subjected to a 12-month 37° C discharge test. The curve(s) 1504 depicts background voltage under low current load during the same 12 months. The portions of each curve 1500 and 1502 closer to 0 V illustrate an end of pulse voltage during higher current pulse discharge. The end of pulse voltage shows a performance improvement. Batteries 10 or cells made with the flexible cathode current collector 100 described herein have a higher end of pulse voltage than batteries or cells made with rigid cathode current collectors, which indicates a smaller battery resistance (ESR). This improvement in ESR may be attributable to better cathode structural integrity with improved interfacial contact between the flexible cathode current collector 100 and the cathode active material 22 as compared to rigid cathode current collectors having a rigid, uniform outer border.

Advantageously, the present disclosure provides for a battery 10 having fewer defects and having cathode assemblies 12 that are flatter or otherwise bulge outward less than known cathode assemblies. The cathode current collectors 100 described herein reduce hoop stress developed by rigid or otherwise uniform outer frames that resist generally outward cathodic expansion during assembly and discharge. The flexible outer border 106 of the cathode current collectors 100 described herein improve structural integrity, increase flatness, and enhance edge quality of the cathode assembly 12. The curvilinear and/or arcuate segments 112 forming the unit cells 110 of the cathode current collector 100 enable the cathode current collector 100 to displace along with the cathodic material 22 during swelling and allows for better contact of the cathodic material 22 to the current collector 100 at nodes 116 defined at intersections of the curvilinear segments 112. The inwardly curved segments 112 also provide the cathode material 22 with a shorter electrical path to the current collector 100.

Although the disclosure herein has been described with reference to particular embodiments, it is to be understood that these embodiments are merely illustrative of the principles and applications of the present disclosure. It is therefore to be understood that numerous modifications may be made to the illustrative embodiments and that other arrangements may be devised without departing from the scope of the present disclosure as defined by the appended claims.

The invention is defined in the appended claims. A non-exhaustive list of aspects of the invention set herein useful for understanding the invention.

An aspect of the invention relates to a current collector 100 for a battery 10. The current collector 100 comprises a flexible current collector portion 102. The flexible current collector portion 102 comprises a lattice 108 defined by a plurality of interconnected unit cells 110. Each unit cell 110 of the plurality of interconnected unit cells 110 including curvilinear segments 112 bounding a through-hole 114. An intersection of each curvilinear segment 112 of the plurality of interconnected unit cells 110 defines a node 116. One or more curvilinear segments 112 of the plurality of interconnected unit cells 110 define an outer border 106 extending about an outer perimeter of the lattice 108. The current collector 100 also comprises one or more control features 122 extending radially outward from the outer border 106 of the lattice 108. The current collector 100 further comprises a lead portion 104 extending radially outward from the outer border 106 of the lattice 108.

In an embodiment, the curvilinear segments 112 of at least one unit cell 110 of the plurality of interconnected unit cells 110 define a tri-lobe profile.

In an embodiment, an angle of intersection between each curvilinear segment 112 at a respective node 116 is greater than 90 degrees.

In an embodiment, for each unit cell 110 of the plurality of interconnected unit cells 110, a radial distance D₁₁₂ from a center point C₁₁₀ of the unit cell 110 to an inner most portion of each curvilinear segment 112 of the unit cell 110 is less than a radial distance E₁₁₂ from the center point to a linear line extending between adjacent nodes 116.

In an embodiment, at least one curvilinear segment 112-A of at least one unit cell 110-A of the plurality of interconnected unit cells 110-A defines a sinusoidal profile.

In an embodiment, curvilinear segments 112-B of at least one unit cell 110-B of the plurality of interconnected unit cells 110-B define an hourglass profile.

In an embodiment, the outer border 106 defines an average profile. The average profile defined by connecting linear elements to outermost tangency points of curvilinear segments defining the outer border 106 extending between a first control feature 122 and a second control feature 122. At least one of the first control feature 122 and the second control feature 122 extends radially beyond the average profile.

In an embodiment, a second control feature 122 extends outward from the lead portion 104.

In an embodiment, the current collector also comprises one or more bridges 120-A connecting the lead portion 104 to the flexible current collector portion 102.

In an embodiment, the one or more bridges 120-A define a profile that is different from a profile of the plurality of interconnected unit cells 110.

Another aspect of the invention relates to a battery 10 comprising a pair of conductive anodes 14 and a conductive cathode 12 interposed between the pair of conductive anodes 14. The conductive cathode 12 comprises a cathode current collector 100 according to any of the above-described or below-described embodiments.

A further aspect of the invention relates to a battery 10 comprising a pair of conductive anodes 14 and a conductive cathode 12 interposed between the pair of conductive anodes 14. The conductive cathode 12 comprising a cathode current collector 100 formed from a resilient material. The cathode current collector 100 comprises a lattice 108 defined by a plurality of interconnected unit cells 110. Each unit cell 110 of the plurality of interconnected unit cells 110 including curvilinear segments 112 bounding a through-hole 114. The cathode current collector 100 also comprises a frameless, undulating outer border 106 encompassing the lattice 108. The cathode current collector 100 further comprises one or more control features 122 extending radially outward from the frameless, undulating outer border 106.

In an embodiment, for each unit cell 110 of the plurality of interconnected unit cells 110, a radial distance D₁₁₂ from a center point C₁₁₀ of the unit cell 110 to an inner most portion of each curvilinear segment 112 of the unit cell 110 is less than a radial distance E₁₁₂ from the center point C₁₁₀ to a linear line extending between adjacent nodes 116 defined by an intersection of adjacent curvilinear segments 112.

In an embodiment, curvilinear segments 112-B of least one unit cell 110-B of the plurality of interconnected unit cells 110-B define an hourglass profile.

In an embodiment, the curvilinear segments 112 of at least one unit cell 110 of the plurality of interconnected unit cells 110 define a tri-lobe profile.

In an embodiment, the frameless, undulating outer border 106 defines an average profile. The average profile defined by connecting linear elements to outermost tangency points of curvilinear segments 112 defining the frameless, undulating outer border 106 extending between a first control feature 122 and a second control feature 122. At least one of the first control feature 122 and the second control feature 122 extends radially beyond the average profile.

Yet another aspect of the invention relates to a current collector 100 for a battery 10. The current collector 100 comprising a flexible lattice 108 defined by a plurality of interconnected unit cells 110. Each unit cell 110 of the plurality of interconnected unit cells 110 including arcuate segments 112 bounding a through-hole 114. The arcuate segments 112 define a tri-lobe profile. The current collector 100 also comprises a frameless outer border 106 extending about a perimeter of the flexible lattice 108. The frameless outer border 106 defined by radial outermost unit cells 110 of the plurality of interconnected unit cells 110. The current collector 100 further comprises a protuberance 122 extending radially outward from the frameless outer border 106 and a lead portion 104 extending radially outward from the frameless outer border 106.

In an embodiment, the frameless outer border 106 defines an undulating profile having an average profile. The average profile defined by connecting linear elements to outermost tangency points of arcuate segments 112 defining the frameless outer border 106 extending between the protuberance 122 and a second protuberance 122. At least one of the protuberance 122 and the second protuberance 122 extends radially beyond the average profile.

In an embodiment, for each unit cell 110 of the plurality of interconnected unit cells 110, a radial distance D₁₁₂ from a center point C₁₁₀ of the unit cell 110 to an inner most portion of each arcuate segment 112 of the unit cell 110 is less than a radial distance E₁₁₂ from the center point C₁₁₀ to a linear line extending between adjacent intersections of arcuate segments 112.

In an embodiment, the current collector 100 further comprising one or more bridges 120-A connecting the lead portion 104 to the flexible lattice 108.

In an embodiment, the one or more bridges 120 define a profile that is different from a profile of the plurality of interconnected unit cells 110.

Another aspect of the invention relates to a battery 10 comprising a pair of conductive anodes 14 and a conductive cathode 12 interposed between the pair of conductive anodes 14. The conductive cathode 12 comprises a cathode current collector 100 according to any of the above-described or below-described embodiments.

While various embodiments of the present technology have been described above, it should be understood that they have been presented by way of example, and not limitation. It will be apparent to persons skilled in the relevant art that various changes in form and detail can be made therein without departing from the scope of the technology. For example, although a few variations have been described in detail above, other modifications or additions are possible. In particular, further features and/or variations may be provided in addition to those set forth herein. For example, the implementations described above may be directed to various combinations and sub-combinations of the disclosed features and/or combinations and sub-combinations of several further features disclosed above.

## Claims

1. A current collector (100) for a battery (10), the current collector (100) comprising:
a flexible current collector portion (120), the flexible current collector portion (120) comprising:
a lattice (108) defined by a plurality of interconnected unit cells (110), each unit cell (110) of the plurality of interconnected unit cells (110) including curvilinear segments (112) bounding a through-hole (114), wherein an intersection of each curvilinear segment of the plurality of interconnected unit cells (110) defines a node (116),
wherein one or more curvilinear segments (112) of the plurality of interconnected unit cells (110) define an outer border (106) extending about an outer perimeter of the lattice (108);
one or more control features (122) extending radially outward from the outer border (106) of the lattice (108); and
a lead portion (104) extending radially outward from the outer border (106) of the lattice (108).

2. The current collector according to claim 1, wherein the curvilinear segments (112) of at least one unit cell (110) of the plurality of interconnected unit cells (110) define a tri-lobe profile.

3. The current collector according to any one of claims 1 or 2, wherein an angle of intersection between each curvilinear segment (112) at a respective node is greater than 90 degrees.

4. The current collector according to any one of claims 1 to 3, wherein for each unit cell(110) of the plurality of interconnected unit cells (110), a radial distance (D₁₁₂) from a center point (C₁₁₀) of the unit cell (110) to an inner most portion of the curvilinear segments (112) of the unit cell (110) is less than a radial distance from the center point (C₁₁₀) to a linear line extending between adjacent nodes (116).

5. The current collector according to any one of claims 1 to 4, wherein at least one curvilinear segment (112-A) of at least one unit cell (110-A) of the plurality of interconnected unit cells (110) defines a sinusoidal profile.

6. The current collector according to any one of claims 1 to 5, wherein curvilinear segments (112-B) of at least one unit cell of the plurality of interconnected unit cells (100) define an hourglass profile.

7. The current collector according to any one of claims 1 to 6, wherein:
the one or more control features (122) of the current collector (100) comprise a first control feature (122) and a second control feature (122);
the outer border (106) defines an average profile, the average profile defined by connecting linear elements to outermost tangency points of curvilinear segments defining the outer border (106) extending between the first control feature (122) and the second control feature (122); and
at least one of the first control feature (122) and the second control feature (122) extends radially beyond the average profile.

8. The current collector according to any one of claims 1 to 7, further comprising a positional control feature (122') extending outwardly from the lead portion (104).

9. The current collector according to any one of claims 1 to 8, further comprising one or more bridges (120) connecting the lead portion (104) to the flexible current collector portion (102).

10. The current collector according to claim 9, wherein the one or more bridges (120) define a profile that is different from a profile of the plurality of interconnected unit cells (110).

11. A battery (10) comprising:
a pair of conductive anodes (10); and
a conductive cathode (12) interposed between the pair of conductive anodes (10), wherein the conductive cathode (10) comprises a current collector (100) according to any one of claims 1 to 10.
